# EUROPÄISCHE PATENTANMELDUNG

(11) **EP 1 367 172 A2**
(43) Veröffentlichungstag der Anmeldung: **03.12.2003**
(21) Anmeldenummer: 03011470.6
(22) Anmeldetag: 21.05.2003
(51) Int. Cl.: D06P 3/14, D06P 5/20, D06M 10/02, D06M 15/564

(54) **Gefärbte, filzfrei ausgerüstete Keratinfasern und Verfahren zu deren Herstellung**

(30) Priorität: 31.05.2002 DE 10224553
(71) Anmelder: BAYER AG, 51368 Leverkusen (DE)
(72) Erfinder: Jansen, Bernhard, Dr., 51061 Köln (DE); Kümmeler, Ferdi, 51371 Leverkusen (DE); Heinen, Ralf, 50737 Köln (DE); Thomas, Helga, Dr., 52134 Herzogenrath (DE); Kauk, Reinhard, 35260 Stadtallendorf (DE); Müller, Hans-Bernhard, 51515 Kürten-Bechem (DE)

(57) **Zusammenfassung**

Bereitgestellt werden gefärbte, filzfrei ausgerüstete Keratinfasern, bevorzugt Wolle, sowie ein Verfahren zur Färbung und Filzfreiausrüstung der Keratinfasern, bevorzugt Wolle, umfassend eine Plasmabehandlung der Keratinfasern, bevorzugt der Wolle, die Färbung sowie die Behandlung mit einem speziellen Ausrüstungsmittel.

## Beschreibung

Die Erfindung betrifft gefärbte, filzfrei ausgerüstete Keratinfasern, insbesondere Wolle, und ein Verfahren zur Färbung und Filzfreiausrüstung der Keratinfasem, insbesondere Wolle.

Zu den Keratinfasern zählen unter anderem Wolle, andere Tierhaare sowie Echthaar. Wirtschaftliche Bedeutung kommt vor allem Geweben, Gestricken und Gewirken von Wolle zu.

In der textilverarbeitenden Industrie besteht nach wie vor ein besonderes Interesse an einer Verringerung der Verfilzungsneigung von Wolle in jeder Form, insbesondere von Rohwolle bzw. unverarbeiteter Wolle. Üblicherweise wird die Verfilzung der Wolle durch Ausrüstung mit speziellen Hilfsmitteln herabgesetzt.

Isocyanate und vor allem selbstdispergierende Isocyanate werden seit langem als Hilfsmittel zur Filzfreiausrüstung von Textilien verwendet. Die inzwischen bevorzugt zum Einsatz gelangenden selbstdispergierenden Isocyanate führen jedoch bei ihrer alleinigen Anwendung häufig noch nicht zu einer völlig zufriedenstellenden Antifilzausrüstung der behandelten Textilien.

Bekannt ist aus DE-A-198 587 34 und DE-A-198 587 36 ferner die Filzfreiausrüstung von Wolle durch Kombination einer Plasmabehandlung mit einer Nachbehandlung unter Einsatz derartiger selbstdispergierender Isocyanate. Um diese selbstdispergierenden Isocyanate auf Wolle zu applizieren, müssen zunächst wässrige Dispersionen hergestellt werden. Da derartige Dispersionen aufgrund der in Wasser einsetzenden Vernetzungsreaktionen der Isocyanatendgruppen nur sehr begrenzt lagerfähig sind, können sie nachteiligerweise erst relativ kurz vor dem Einsatz zur Wollbehandlung hergestellt werden.

In der DE-A-2 035 172 wird ein Verfahren zur Antifilzausrüstung von Wolle beschrieben, bei dem man die Wolle mit einer Polyurethanlatexflotte behandelt, das Gewebe trocknet und anschließend aushärtet. Um für die Ausrüstung geeignete Latices herstellen zu können, müssen bei der Vorpolymerisation organische Lösungsmittel sowie externe Emulgatoren eingesetzt werden. Die zunächst erhaltenen Präpolymere werden anschließend durch Zugabe eines Kettenverlängerungsmittels auspolymerisiert.

DE-OS 26 57 513 offenbart ein Verfahren zur Aritifilzausrüstung von Wolle, in dem Umsetzungsprodukte aus Polyisocyanaten mit hydroxyfunktionellen Verbindungen eingesetzt werden.

DD 5381 beschreibt ein Verfahren zur Herstellung von hydrophilen basischen Polyurethanen aus Diisocyanaten, diprimären aliphatischen Glykolen, die in offener Kette ein oder mehrere basische tertiäre Stickstoffatome enthalten, und diprimären Glykolen ohne basischen Stickstoff. Für derartige Produkte werden als Anwendungsmöglichkeiten ganz allgemein Folien, Faserstoffe, Schlichte- und Appreturmittel, Animalisierungsmittel und Leimungsmittel für Papier genannt.

DD 5379 beschreibt ein Verfahren zur Herstellung hydrophiler basischer Polyurethane aus Diisocyanaten und stickstoffhaltigen Glykolen beschrieben, wobei die Glykole in der Kette zwischen den Hydroxylgruppen ein oder mehrere tertiäre Stickstoffatome enthalten, deren dritte Valenzen durch einwertige Alkylgruppen abgesättigt sind, die nicht mehr Kohlenstoffatome aufweisen als die kürzeste Kohlenstoffkette zwischen Hydroxylgruppe und tertiärem Stickstoff. Auch für diese Produkte werden als Anwendungsmöglichkeiten ganz allgemein Folien, Faserstoffe, Schlichte- und Appreturmittel, Animalisierungsmittel und Leimungsmittel für Papier genannt.

DD 5367 beschreibt ganz spezielle Polyurethane, die aus Diisocyanaten und N,N'-Di-[oxyalkyl]-piperazinen hergestellt werden.

In der noch nicht offengelegten deutschen Patentanmeldung mit dem Aktenzeichen 100 600 48 ist ein Verfahren zur Filzfreiausrüstung von Wolle beschrieben, bei dem die Wolle nach einer Plasmabehandlung einer Behandlung mit einer wässrigen Dispersion kationischer Polyurethane unterzogen wird. Im Hinblick auf die Art und Weise, wie diese Behandlung mit der Dispersion kationischer Polyurethane durchgeführt wird, wird lediglich ausgeführt, dass alle möglichen bekannten Ausrüstungsapparate prinzipiell einsetzbar seien.

Die Aufgabe der vorliegenden Erfindung bestand darin, ein Verfahren bereitzustellen, durch das mit vertretbarem apparativem Aufwand gefärbte und filzfrei ausgerüstete Keratinfasern, insbesondere Wolle, zur Verfügung gestellt werden können.

Gegenstand der vorliegenden Erfindung ist ein Verfahren zur Färbung und Filzfreiausrüstung von Keratinfasern, bevorzugt Wolle, das dadurch gekennzeichnet ist, dass die Keratinfasern, bevorzugt die Wolle, drei Behandlungsschritten ausgesetzt wird,
(a) einer Behandlung mit einem Plasma,
(b) einer Behandlung mit einer wässrigen Dispersion kationischer Polyurethane, und
(c) einer Färbung,
wobei diese Behandlungsschritte (a), (b) und (c) in jeder Reihenfolge durchgeführt werden können.

Im erfindungsgemäßen Verfahren können verschiedenste Typen von Keratinfasem eingesetzt werden, z.B. Wolle, andere Tierhaare als Wolle sowie Echthaare.

Das erfmdungsgemäße Verfahren erlaubt es vorteilhafterweise, die für die Behandlung und Ausrüstung von Keratinfasern, bevorzugt Wolle, notwendigen Schritte in flexibler Art und Weise miteinander zu kombinieren und apparativ einfach durchzuführen.

Bevorzugt ist eine Ausführungsform (A) des erfindungsgemäßen Verfahrens, bei der die Keratinfasern, bevorzugt Wolle,
- als erstes gemäß Schritt (a) einer Behandlung mit einem Plasma ausgesetzt,
- anschließend gemäß Schritt (b) mit einer wässrigen Dispersion kationischer Polyurethane behandelt wird,
- und diese Behandlung gemäß Schritt (b) in einer Färbeapparatur erfolgt und entweder vor oder nach der Färbung der Keratinfasern, bevorzugt der Wolle gemäß Schritt (c) durchgeführt wird.

Gemäß einer besonders bevorzugten Ausführungsform (A1) des erfmdungsgemäßen Verfahren werden die Keratinfasem, bevorzugt die Wolle,
- als erstes gemäß Schritt (a) einer Behandlung mit einem Plasma ausgesetzt,
- anschließend gemäß Schritt (b) in einer Färbeapparatur mit einer wässrigen Dispersion kationischer Polyurethane behandelt,
- und zwar unmittelbar bevor abschließend eine Färbung der Keratinfasern, bevorzugt der Wolle, gemäß Schritt (c) erfolgt.

Gemäß einer ebenso besonders bevorzugten Ausführungsform (A2) des erfindungsgemäßen Verfahrens werden Keratinfasern, bevorzugt die Wolle,
- als erstes gemäß Schritt (a) einer Behandlung mit einem Plasma ausgesetzt,
- anschließend einer Färbung gemäß Schritt (c) unterzogen,
- und zwar unmittelbar bevor abschließend gemäß Schritt (b) die Behandlung mit einer wässrigen Dispersion kationischer Polyurethane in der Färbeapparatur erfolgt.

Eine weitere Ausführungsform (B) des erfindungsgemäßen Verfahrens besteht darin, dass die Keratinfasern, bevorzugt die Wolle
- als erstes gemäß Schritt (c) einer Färbung unterzogen,
- anschließend gemäß Schritt (a) einer Behandlung mit einem Plasma ausgesetzt wird,
- und abschließend gemäß Schritt (b) mit einer wässrigen Dispersion kationischer Polyurethane behandelt wird.

An die Durchführung der Schritte (a) bis (c) können sich unabhängig von der Reihenfolge der Durchführung gegebenenfalls auch noch weitere Ausrüstungsschritte (d) mit weiteren Hilfs- und Zusatzstoffen anschließen.

Bei der im erfindungsgemäßen Verfahren bevorzugt eingesetzten Wolle kann es sich um unterschiedliche Stufen der Wollverarbeitung handeln, z.B. Flocke, Wollkammzug, Wollgarn, Wollvorgarn, Gewebe, Gestricke oder Gewirke, Stückware sowie auch fully fashioned - Artikel aus Wolle. Einsetzbar sind aber auch Mischungen aus Wolle mit Synthesefasern wie Polyamid oder Polyacrylnitril und/oder mit natürlichen Fasern wie Baumwolle.

Der Wassergehalt der Wolle beträgt dabei üblicherweise 4 bis 40 Gew.%, bevorzugt 5 bis 30 Gew.%, besonders bevorzugt 6 bis 25 Gew.% und insbesondere 8 bis 15 Gew.%.

Die Plasmabehandlung der Keratinfasern, bevorzugt der Wolle, gemäß Schritt (a) des erfindungsgemäßen Verfahrens kann entweder in Form einer Niedertemperatur-Plasmabehandlung bei verringertem Druck oder in Form einer Coronabehandlung bei Normaldruck erfolgen.

Die Niedertemperatur-Plasmabehandlung ist ausführlich in der DE 196 16 776 C1 beschrieben, auf die hiermit ausdrücklich Bezug genommen wird. Die Keratinfasern, bevorzugt die Wolle, werden bei einem Druck von 10⁻² - 10 mbar über einen Zeitraum von 1 - 600 Sekunden einer Hochfrequenzentladung mit einer Frequenz von 1 kHz - 3 GHz und einer Leistungsdichte von 0.001 - 3 W/cm³ unterworfen, gegebenenfalls unter Zusatz von nicht polymerisierenden Gasen.

Die Durchführung erfolgt bevorzugt unter einem Druck von 0,1 - 1 mbar und über einen Zeitraum von 2 - 5 Minuten.

Das eigentliche Niedertemperatur-Plasma wird durch Einspeisung von elektromagnetischer Strahlung im Frequenzbereich von 1 kHz - 3 GHz erzeugt. In einer bevorzugten Variante wird das Niedertemperatur-Plasma über eine Mikrowellenentladung von 1 - 3 GHz erzeugt (Die Leistungsdichte an der Auskopplung beträgt insbesondere 0.1 - 15 W/cm²). Die elektromagnetische Strahlung kann hierbei kontinuierlich oder gepulst zugeführt werden. Bewährt hat sich insbesondere eine gepulste Hochfrequenzentladung mit einer Pulsfrequenz bis zu 10 kHz.

Im Fall der zusätzlichen Verwendung von nicht polymerisierenden Gasen als Plasmaprozessgase werden diese mit einer Durchflussrate von bis zu 200 1/h in den Plasmabehandlungsraum eingelassen. Als nicht polymerisierende Gase sind insbesondere Sauerstoff, Stickstoff, Edelgase, insbesondere Argon, Luft oder Mischungen dieser Gase geeignet.

Konstruktion und apparative Anordnungen eines Niedertemperatur-Plasma-Reaktors sind an sich bekannt. Vorzugsweise verwendet man einen elektrodenlos ausgeführten Reaktor mit einer Auskopplung für Mikrowellen. Die zu behandelnden Keratinfasern, bevorzugt die Wolle, werden bevorzugt unterhalb der Auskopplungseinheit plaziert. Der Abstand der Keratinfasern, bevorzugt der Wolle zur Auskopplungseinheit beträgt bevorzugt 1 - 30 cm, insbesondere 2 - 10 cm.

Nachdem man die zu behandelnden Keratinfasern, bevorzugt die Wolle, in den Reaktor eingebracht hat, wird dieser in geeigneter Weise mit Vakuumpumpen so evakuiert, dass der Druck während der Plasmabehandlung im Bereich von 10⁻² - 10 mbar, vorzugsweise von 0.1 - 1 mbar liegt. Bei kontinuierlichem Durchlaufbetrieb werden bevorzugt spezielle Vakuumschleusen angelegt, die eine strömungsfreie Einund Ausführung des Materials ermöglichen.

Alternativ zu dieser Ausführungsform der Niedertemperatur-Plasmabehandlung unter niedrigem Druck können die Keratinfasern, bevorzugt die Wolle, auch einer Coronabehandlung bei einem Druck im Bereich von 100 mbar - 1.5 bar, bevorzugt bei Normaldruck, unterzogen werden. Die Coronabehandlung ist ausführlich in der DE-A-198 587 36 beschrieben, auf die hiermit ausdrücklich Bezug genommen wird.

Bei der Coronabehandlung werden die Keratinfasern, bevorzugt die Wolle, über einen Zeitraum von 1 - 60 Sekunden, bevorzugt 2-40 Sekunden und insbesondere 3-30 Sekunden, einer Hochfrequenzentladung mit einer Leistungsdichte von üblicherweise 0.01 - 5 Ws/cm² unterworfen, gegebenenfalls unter Zusatz von nicht polymerisierenden Gasen. Geeignete nicht polymerisierende Gase sind Luft, Sauerstoff, Stickstoff, Edelgase oder Gemische davon.

Das eigentliche Plasma wird durch Anlegen einer Wechselspannung von 1-20 kV im Frequenzbereich zwischen 1kHz - 1 GHz, bevorzugt 1-100 kHz an Elektroden erzeugt, wobei ein oder beide Pole mit einem Isolatormaterial versehen sind. Die Wechselspannung kann dabei entweder kontinuierlich oder mit Einzelpulsen bzw. mit Pulszügen und dazwischenliegenden Pausen zugeführt werden.

Konstruktion und apparative Anordnungen eines Corona-Reaktors sind an sich bekannt und beispielsweise in der DE-A-197 31 562 beschrieben. Bevorzugt wird die Corona-Behandlung über elektrische Entladungen im Normaldruckbereich durchgeführt, indem die zu behandelnde Wolle zunächst in ein geschlossenes, dichtes Behandlungsgehäuse eingeführt, dort mit dem Arbeitsgas, d.h. dem oben erwähnten nicht polymerisierenden Gas, beladen und anschließend in einem Spalt zwischen mindestens zwei Behandlungselektroden einer elektrischen Barriereentladung ausgesetzt wird. Der Abstand der Keratinfasern, bevorzugt des Wollmaterials, zu den Behandlungselektroden beträgt 0-15 mm, bevorzugt 0.1 - 5 mm und insbesondere 0.3 - 2 mm. Die Behandlungselektroden sind bevorzugt als drehbare Walzen ausgebildet, von denen eine oder beide mit elektrisch festem dielektrischem Material beschichtet sind.

Die Durchführung der Coronabehandlung bei einem Druck im Bereich von 100 mbar bis 1.5 bar, bevorzugt bei Normaldruck, hat im Vergleich zur Niederdruck-Plasmabehandlung bei 10⁻² - 10 mbar den Vorteil, dass die apparative Anordnung sehr viel weniger aufwendig ist als bei der Niederdruck-Behandlung. Es sind keine Vakuumpumpen erforderlich, und es entfällt auch die Anbringung spezieller Vakuumschleusen.

Die besondere Wirkung der Plasmabehandlung in Schritt (a) des erfindungsgemäßen Verfahrens könnte wie folgt erklärt werden. Die in der Faser vorhandene Flüssigkeit desorbiert während des Verfahrens als Wasserdampf/gas von der Faseroberfläche. Es kommt zur Ausbildung von energiereichen Elektronen, Ionen sowie hochangeregten neutralen Molekülen bzw. Radikalen, die auf die Oberfläche der Faser einwirken, wobei der von der Faser desorbierte Wasserdampf bewirkt, daß in unmittelbarer Nähe der jeweiligen Faseroberfläche besonders reaktive Teilchen gebildet werden, die auf die Oberfläche einwirken.

Die für den Schritt (b) verwendeten kationischen Polyurethane besitzen ein Molekulargewicht (Gewichtsmittel) von mindestens 5000, bevorzugt mindestens 8000, besonders bevorzugt mindestens 9000. Die Obergrenze des Molekulargewichtes liegt üblicherweise bei 50.000, vorzugsweise bei 45.000 und besonders bevorzugt bei 40.000.

Die kationischen Polyurethane sind erhältlich durch Umsetzung von
(i) organischen Polyisocyanaten der allgemeinen Formel (I)

   Q[NCO]_{p,} (I)

   worin
   - p: eine Zahl von 1,5 bis 5 darstellt und
   - Q: ein organischer Rest ist
   und
(ii) ein oder mehreren Bis- und/oder Polyhydroxylverbindungen, die mindestens ein tertiäres Stickstoffatom und mindestens zwei Hydroxylgruppen enthalten,
wobei der kationische Charakter der Polyurethane durch anschließende Protonierung oder Alkylierung der in der Komponente (ii) enthaltenen tertiären Stickstoffatome erhältlich ist.

Gegebenenfalls werden zur Herstellung der erfindungsgemäß eingesetzten kationischen Polyurethane auch noch
(iii) ein oder mehrere Bis- und /oder Polyhydroxylverbindungen, welche keine Stickstoffatome enthalten und Molekulargewichte von 62 bis 5000 besitzen,
   eingesetzt.

Als organische Polyisocyanate (i) der allgemeinen Formel (I)

Q[NCO]_{p,} (I)

wobei Q und p die oben genannten Bedeutungen haben, kommen beispielsweise die drei folgenden Typen in Frage:
1) Aliphatische, cycloaliphatische, araliphatische und aromatische Polyisocyanate, die keine Isocyanurat-, Uretdion-, Allophanat-, Biuret- oder Oxadiazin-strukturen enthalten,
2) Aliphatische, cycloaliphatische, araliphatische und aromatische Polyisocyanate, die Isocyanurat- und/oder Uretdion- und/oder Allophanatund/oder Biuret- und/oder Oxadiazinstrukturen enthalten,
3) Isocyanatpräpolymere, die erhältlich sind durch Umsetzung von aliphatischen, cycloaliphatischen, araliphatischen und aromatischen Diisocyanaten und Polyestern und/oder Polyethern.

Die aliphatischen, cycloaliphatischen, araliphatischen und aromatischen Polyisocyanate 2) mit Isocyanurat- und/oder Uretdion- und/oder Allophanat- und/oder Biuret- und/oder Oxadiazinstrukturen können nach an sich bekannten Verfahren des Standes der Technik beispielsweise aus entsprechenden aliphatischen, cycloaliphatischen, araliphatischen und aromatischen Diisocyanaten, die zum oben genannten Typ 1) gehören, hergestellt werden.

Unter die Isocyanatpräpolymere 3) fallen beispielsweise Umsetzungsprodukte von aliphatischen, cycloaliphatischen, araliphatischen und aromatischen Diisocyanaten, die zum oben genannten Typ 1) gehören, und Polyestern und/oder Polyethern, wobei diese Umsetzungsprodukte gegebenenfalls noch nicht umgesetzte, freie Diisocyanate enthalten können.

Als aliphatische, cycloaliphatische, araliphatische und aromatische Diisocyanate, die als Typ 1) oder zur Herstellung der Typen 2) und 3) eingesetzt werden können, seien beispielhaft genannt:

1,4-Diisocyanatobutan, 1,6-Diisocyanatohexan, 1,5-Diisocyanato-2,2-dimethylpentan, 2,2,4-Trimethyl-1,6-diisocyanatohexan, 1,3-und 1,4-Diisocyanatocyclohexan, 1-Isocyanato-1-methyl-4-isocyanatomethylcyclohexan und 4,4'-Diisocyanato-cyclohexylmethan, 2,4- und 2,6-Diisocyanato-1-methylbenzol, 4,4'- und 4,2'-Diisocyanato-diphenylmethan sowie beliebige Gemische dieser Diisocyanate.

Als bevorzugte Beispiele für modifizierte Isocyanate 2) seien genannt: Trimerisierungsprodukte des 1,6-Diisocyanatohexans sowie dessen Derivate auf Biuretbasis, Gemische aus dem Uretdion und den Trimerisierungsprodukten des 1,6-Diisocyanatohexans, das Uretdion aus 2,4- und/oder 2,6-Diisocyanato-1-methylbenzol.

Als bevorzugte Beispiele für die Isocyanatpräpolymere 3) seien genannt: Umsetzungsprodukte des 2,4- und/oder 2,6-Diisocyanato-1-methylbenzols oder 1,6-Diisocyanatohexans mit mehrwertigen Alkoholen, so beispielsweise des 2,4-und/oder 2,6-Diisocyanato-1-methylbenzols mit Trimethylolpropan.

Bevorzugt werden organische Polyisocyanate (i) der allgemeinen Formel (I)

Q[NCO]ₚ, (I)

worin
- p: eine Zahl von 1,5 bis 5 darstellt und
- Q: einen aliphatischen Kohlenwasserstoffrest mit 2 bis 18, insbesondere 6 bis 10 Kohlenstoffatomen, einen cycloaliphatischen Kohlenwasserstoff-rest mit 4 bis 15, insbesondere 5 bis 10 Kohlenstoffatomen, einen aromatischen Kohlenwasserstoffrest mit 6 bis 15, vorzugsweise 6 bis 13 Kohlenstoffatomen oder einen araliphatischen Kohlenwasserstoffrest mit 8 bis 15, vorzugsweise 8 bis 13 Kohlenstoffatomen darstellt.

Als Bis- und/oder Polyhydroxylverbindungen (ii) sind solche der allgemeinen Formel (II) bevorzugt

HO-(CHR¹)ₘ-NR²-(CH₂R¹)ₙ-OH (II),

worin
- n und m: unabhängig voneinander eine Zahl von 1 bis 6 darstellen,
- R¹: unabhängig voneinander Wasserstoff oder einen geradkettigen oder verzweigten C₁-C₄-Alkylrest darstellen, wobei entlang der Alkylenketten (CHR¹)ₙ und (CHR¹)ₘ von Kohlenstoffatom zu Kohlenstoffatom wechselnd der Rest R¹ sowohl Wasserstoff als auch ein geradkettiger oder verzweigter C₁-C₄-Alkylrest sein kann,
- R²: geradkettiges oder verzweigtes C₁-C₂₀-Alkyl, bevorzugt C₁-C₁₈-Alkyl, C₁-C₁₀-Cycloalkyl, bevorzugt C₅-C₆-Cycloalkyl, C₆-C₁₂-Aryl, bevorzugt Phenyl, oder einen Rest -(CH₂)_{q}-OH, wobei q eine Zahl von 1 bis 6 darstellt.

Als Bis- und/oder Polyhydroxylverbindungen (ii) der allgemeinen Formel (II) seien beispielhaft genannt:
N-Methyldiethanolamin, N-Ethyldiethanolamin, N-Butyldiethanolamin, N-Methyldipentanolamin-1,5, N-Ethyldipentanolamin-1,5, Triethanolamin, Umsetzungsprodukte von Fettaminen mit zwei Mol Ethylenoxid oder Propylenoxid, Möglich sind auch Alkoxylierungsprodukte der oben genannten Verbindungen wie beispielsweise Tris-[2-(2-hydroxyethoxy)-ethyl]-amin.

Als Bis- und/oder Polyhydroxylverbindungen (iii), die keine Stickstoffatome beinhalten und Molekulargewichte von 62 bis 5000 besitzen seien beispielhaft genannt:
Ethylenglykol, Propandiol-1,2, Propandiol-1,3, Butandiol-1,4, Butandiol-1,3, Butandiol-2,3, Butandiol-1,2, Butendiol-1,4, Butindiol-1,4, Pentandiol-1,5, Neopentylglykol, Hexandiol-2,5, Hexandiol-1,6, 3-Methylpentandiol-1,5, 2,5-Dimethylhexan-2,5-diol, Octadecandiol-1,12, Diethylenglygol, Dipropylenglykol, Triethylenglykol, Tripropylenglykol, Tetraethylenglykol, Tetrapropylenglykol sowie weitere höhere Polyethylen- und Polypropylenglykole, Glycerin, Trimethylolpropan, 2-Hydroxymethyl-2-methyl-1,3-propandiol, 1,2,6-Hexantriol und Pentaerythrit.

Des weiteren sind Polyether und Polyester mit gewichtsmittleren Molekulargewicht von bis zu 5000, bevorzugt bis zu 3000, besonders bevorzugt bis 2000 als Komponente (iii) verwendbar. Polyether sind erhältlich aus den oben als Bis- und /oder Polyhydroxylverbindungen genannten Verbindungen als Startermolekülen durch Reaktion mit Ethylen-, Propylen- und/ oder Butylenoxid nach bekannten Verfahren des Standes der Technik. Polyester sind ebenfalls aus den oben genannten Bis- und /oder Polyhydroxylverbindungen erhältlich und zwar durch Veresterung mit technisch zugänglichen Di- oder Tricarbonsäuren nach bekannten Verfahren des Standes der Technik.

Bewährt haben sich in Schritt (b) vor allem kationische Polyurethane, die erhältlich sind durch Umsetzung von
(i) organischen Polyisocyanaten der allgemeinen Formel (I)

   Q[NCO]_{p,} (I)

   worin
   - p: eine Zahl von 1,5 bis 5, insbesondere 2, darstellt und
   - Q: einen aliphatischen Kohlenwasserstoffrest mit 2 bis 18, insbesondere 6 bis 10 Kohlenstoffatomen, einen cycloaliphatischen Kohlenwasserstoff-rest mit 4 bis 15, insbesondere 5 bis 10 Kohlenstoffatomen, einen aromatischen Kohlenwasserstoffrest mit 6 bis 15, vorzugsweise 6 bis 13 Kohlenstoffatomen sowie einen araliphatischen Kohlenwasserstoffrest mit 8 bis 15, vorzugsweise 8 bis 13 Kohlenstoffatomen darstellt
   und
(ii) Bis- und/oder Polyhydroxylverbindungen (ii) der allgemeinen Formel (II)

   HO-(CHR¹)ₘ-NR²-(CH₂R¹)ₙ-OH (II),

   worin
   - n und m: unabhängig voneinander eine Zahl von 1 bis 6 darstellen und insbesondere gleich sind und eine Zahl von 1 bis 3 darstellen,
   - R¹: unabhängig voneinander Wasserstoff oder einen geradkettigen oder verzweigten C₁-C₄-Alkylrest darstellen, wobei entlang der Alkylenketten (CHR¹)ₙ und (CHR¹)ₘ von Kohlenstoffatom zu Kohlenstoffatom wechselnd der Rest R¹ sowohl Wasserstoff als auch ein geradkettiger oder verzweigter C₁-C₄-Alkylrest sein kann,
   - R²: geradkettiges oder verzweigtes C₁-C₂₀-Alkyl, insbesondere C₁-C₁₈Alkyl, C₁-C₁₀-Cycloalkyl, insbesondere C₅-C₆-Cycloalkyl, C₆-C₁₂-Aryl, insbesondere Phenyl, oder einen Rest (CH₂)_{q}-OH, wobei q eine Zahl von 1 bis 6, insbesondere 1 bis 3 darstellt.
   und wobei der kationische Charakter der Polyurethane über Protonierung oder Alkylierung der in der Komponente (ii) enthaltenen tertiären Stickstoffatome erzeugt wird.

Ganz besonders bevorzugt werden in Schritt b) des erfindungsgemäßen Verfahrens solche kationischen Polyurethane eingesetzt, die durch Umsetzung von
(i) 2,4-Toluylendiisocyanat oder 2,6-Toluylendiisocyanat, 4,4'- und 4,2'-Diisocyanato-diphenylmethan oder Gemischen dieser Isomeren mit
(ii) N-Methyl- oder N-Butyldiethanolamin
erhalten werden, wobei der kationische Charakter der Polyurethane über Protonierung der in der Komponente (ii) enthaltenen tertiären Stickstoffatome durch Behandlung dieser Umsetzungsprodukte mit einer der Säuren Salzsäure, Schwefelsäure, Phosphorsäure, Ameisensäure, Essigsäure oder Propionsäure erzeugt wird.

Zur Herstellung der in Schritt (b) des erfindungsgemäßen Verfahrens einzusetzenden kationischen Polyurethane werden die Bis- und/oder Polyhydroxylverbindungen (ii) und gegebenenfalls (iii) üblicherweise in einem aprotischen Hilfslösungsmittel vorgelegt.

Dabei hat es sich bewährt, die Menge an Polyhydroxylverbindungen (ii) und gegebenenfalls (iii) so zu wählen, dass noch ein gut verarbeitbares kationisches Polymeres resultiert.

Als aprotische Lösungsmittel für die Reaktion seien beispielhaft genannt: Alkyletheracetate, Glykoldiester, Toluol, Carbonsäureester, Aceton, Methylethylketon, Tetrahydrofuran und Dimethylformamid, N-Methylpyrrolidon und Propylencarbonat.

Besonders bevorzugt sind Methoxypropylacetat, Propylenglycoldiacetat, Butyldiglycolacetat und Propylencarbonat.

Zu dieser vorgelegten Lösung wird dann unter Rühren das organische Polyisocyanat (i) zugesetzt. Dabei gilt es, Überschüsse an organischem Polyisocyanat (i) zu vermeiden, da dies aufgrund der Anwesenheit einer Vielzahl von tert. Aminstrukturen aus den Komponenten (ii) zu unerwünschten Nebenreaktionen führt.

Durch die Mitverwendung an sich bekannter Katalysatoren wie beispielsweise Dibutylzinndilaurat, Zinn-(II)-octoat oder 1,4-Diazabicyclo[2,2,2]octan in Mengen von 10 bis 1000 ppm, bezogen auf die Reaktionskomponenten, kann die Reaktion beschleunigt werden. Die Reaktion wird im Temperaturbereich bis 130°C, vorzugsweise im Bereich zwischen 20 und 80°C durchgeführt. Die Reaktionstemperatur ist nach oben durch den Siedepunkt des Lösungsmittels begrenzt; es kann zweckmäßig sein, die Reaktion unter Siedekühlung durchzuführen. Die Reaktion wird durch Messung der IR-Spektren und Auswertung der NCO-Bande bei 2260-2275 cm⁻¹ verfolgt und ist beendet, wenn keine NCO-Bande mehr zu sehen ist.

Es hat sich bewährt, das molare Verhältnis der Komponente (i) zur Komponente (ii) plus gegebenenfalls der Komponente (iii) so einzustellen, dass ein ungefähr stöchiometrisches Verhältnis der NCO- und OH-Endgruppen vorliegt. (Die Stöchiometrie bei der Umsetzung liegt bei 1:1 bzw. in der Nähe des Wertes 1:1.)

Der kationische Charakter kann den Polyurethanen auf zwei Wegen verliehen werden: entweder durch Protonierung oder durch Alkylierung der in der Komponente (ii) enthaltenen tertiären Stickstoffatome.

Bei der Protonierung wird die nach der Umsetzung der Komponenten (i), (ii) und gegebenenfalls (iii) erhaltene Reaktionslösung mit einer wässrigen Phosphorsäure verdünnt. Als Säuren können beispielsweise Salzsäure, Schwefelsäure, Ameisensäure, Essigsäure oder Propionsäure eingesetzt werden. Bevorzugt sind Ameisensäure und Essigsäure. Durch diese Säurezugabe werden die tertiären Stickstoffatome aus der Komponente (ii) protoniert. Hierbei wird üblicherweise mit einer stöchiometrischen Menge an Säure, bezogen auf die Stickstoffatome gearbeitet, so dass eine möglichst vollständige Protonierung erzielt wird. Anschließend wird das Lösungsmittel abdestilliert, bis der theoretische Feststoffgehalt erreicht ist. In einer weniger bevorzugten Ausführungsform verbleibt das Lösungsmittel entweder ganz oder auch teilweise im Produkt.

Bei der Alkylierung wird die nach der Umsetzung der Komponenten (i), (ii) und gegebenenfalls (iii) erhaltene Reaktionslösung mit einem Alkylierungsmittel versetzt. Als Alkylierungsmittel können dabei Methylchlorid, Methyljodid, Dimethylsulfat oder p-Toluolsulfonsäuremethylester eingesetzt werden. Hierbei werden die in den Komponenten (ii) enthaltenen tertiären Stickstoffatome teilweise oder vollständig alkyliert. Durch diese teilweise oder vollständige Alkylierung wird ein Polyurethan mit permanenten kationischen Ladungen erhalten.

In Schritt (b) des erfindungsgemäßen Verfahrens wird das in wässriger Dispersion vorliegende kationische Polyurethan bei einem pH -Wert von 2 bis 7 , bevorzugt 3 bis 6, besonders bevorzugt 4 bis 6 und insbesondere 4,5 bis 5,5 auf die Wolle appliziert. Die Temperatur, bei der diese Behandlung mit der wässrigen Dispersion der kationischen Polyurethane durchgeführt wird, liegt üblicherweise im Bereich von 20 bis 80 °C , bevorzugt 30 bis 70 °C , besonders bevorzugt 30 bis 60 °C.

Die Konzentration an wässrigem kationischem Polyurethan in der Ausrüstungsflotte liegt bei 0,1 bis 75 g/l Ausrüstungsflotte, bevorzugt bei 0,5 bis 50 g /l Ausrüstungsflotte, bezogen auf den Feststoffgehalt an Polyurethan.

Das Flottenverhältnis ist in weiten Grenzen wählbar und kann im Bereich von 1: (5 bis 40), bevorzugt 1: (5 bis 30) liegen.

Unerwarteterweise ziehen die kationischen Polyurethane in Schritt (b) des erfindungsgemäßen Verfahrens von selbst auf die Keratinfasern, bevorzugt die Wolle, auf. Dies ist um so erstaunlicher, als die Wolle bei dem üblicherweise verwendeten, leicht sauren pH-Wert der wässrigen Flotte selber eine kationisch geladene Oberfläche aufweist, wodurch die kationischen Polyurethane eigentlich abgestoßen werden sollten, was ein schlechteres Aufziehverhalten der Polyurethane zur Folge haben müsste.

Die Färbung der Keratinfasern, bevorzugt der Wolle, gemäß Schritt (c) des erfindungsgemäßen Verfahrens kann mit verschiedenen Farbstoffldassen (Halfmilling/Milling-, Milling-, 1:2- Metallkomplexfarbstoffen ohne und mit Sulfogruppen, Nachchromierungs- und Reaktiv-Farbstoffen) erfolgen. Überraschenderweise gelingt es mit allen vorgenannten Farbstoffen - entgegen allen Erfahrungen bei der Färbung von Keratinfasern, bevorzugt der Wolle, die nach dem Hercosett-Verfahren filzfrei ausgerüstet wurde, die Superwash-Echtheiten zu erreichen, wie sie von den Normen TM 174 (Schweißechtheit alkalisch) und TM 193 (Haushaltswäsche bei 50°C) der Woolmark Company gefordert werden.

Bei der Ausführungsform (A) des erfindungsgemäßen Verfahrens erfolgt zunächst die Plasmabehandlung der Keratinfasern, bevorzugt der Wolle, gemäß Schritt (a). Die Behandlung der Keratinfasem, bevorzugt der Wolle, gemäß Schritt (b) mit der wässrigen Dispersion kationischer Polyurethane kann entweder vor (Ausführungsform (A 1)) oder nach (Ausführungsform (A2)) der Färbung gemäß Schritt (c) erfolgen und zwar in der gleichen Färbeapparatur, in der auch die Färbung durchgeführt wird.

Die beiden Behandlungsschritte (a) und (b) (Ausführungsform (A1)) bzw. (a) und (c) (Ausführungsform (A2)) müssen dabei allerdings nicht notwendigerweise direkt nacheinander ausgeführt werden. Vielmehr kann dazwischen auch der Schritt des textilen Verarbeitungsprozesses erfolgen, beispielsweise in Form von Verspinnen, Weben, Stricken, Wirken bzw. des fertigen Konfektionierens der Ware.

Hierdurch ist es beispielsweise möglich, nach Schritt (a) zunächst Stückware herzustellen und diese erst danach gemäß Schritt (c) zu färben und dann gemäß Schritt (b) filzfrei auszurüsten. Neben einer größeren betrieblichen Flexibilität ist damit, insbesondere bei der Färbung, eine schnellere Reaktion auf ggf. kurzfristige Farbänderungen der Mode möglich.

Bei den Ausführungsformen (A1) und (A2) erfolgt die Behandlung gemäß Schritt (b) in der Färbeapparatur bevorzugt unmittelbar vor bzw. unmittelbar nach der Färbung der Keratinfasem, bevorzugt der Wolle, gemäß Schritt (c). "Unmittelbar" bedeutet in diesem Zusammenhang, dass zwischen den Behandlungen gemäß Schritt (b) und nachfolgend Schritt (c) (Ausführungsform (A1)) bzw. gemäß Schritt (c) und nachfolgend Schritt (b) (Ausführungsform (A2)) keine anderen Ausrüstungsschritte erfolgen. Gegebenenfalls möglich ist lediglich die Durchführung eines oder mehrerer Spülvorgänge sowie die Einstellung eines gewünschten pH-Wertes.

Als für die Durchführung des Schrittes (b) bei der Ausführungsform A geeignete Färbeapparate kommen alle Färbeapparate des Standes der Technik in Betracht, welche geeignet sind für eine Färbung von Keratinfasern, bevorzugt der Wolle in Form von Flocke, Kammzug, Vorgarn, Garn, sei es als Spule oder Strang, Gewebe, Gewirke und Gestricke sowie Stückware wie auch fully fashioned- Artikel aus Wolle aber auch Mischungen aus Wolle mit Synthesefasern, wie beispielsweise Polyamid oder Polyacrylnitril, und/ oder mit natürlichen Fasern wie Baumwolle sowie Cellulose-Regeneratfasern wie Viskose oder Lyocell.

Der Hauptvorteil der Ausführungsformen (A1) und (A2) ist darin zu sehen, dass die Keratinfasern, bevorzugt die Wolle, die sowohl gefärbt als auch filzfrei ausgerüstet werden müssen, wahlweise entweder zuerst gefärbt und dann ausgerüstet oder zuerst ausgerüstet und dann gefärbt werden können und dass beide Arbeitsgänge unmittelbar nacheinander im gleichen Apparat ausgeführt werden können.

Hieraus ergibt sich neben einer größeren betrieblichen Flexibilität bezüglich der Färberei und Ausrüstungsbetrieb eine nicht geringe Arbeitsersparnis. So entfallen beispielsweise Arbeitsgänge wie das Entleeren des Färbeapparates nach der Färbung und eine darauf folgende separate Ausrüstung des gefärbten Materials, beispielsweise auf einer Lisseuse. Ein weiterer Vorteil liegt in der Energieersparnis, denn die Wolle muß, abhängig von der Art der Weiterverarbeitung, nur einmal getrocknet werden.

Bei der Ausführungsform (B) des erfindungsgemäßen Verfahrens ist es möglich, die Keratinfasern, bevorzugt die Wolle, zunächst gemäß Schritt (c) zu färben und die gefärbten Keratinfasern, bevorzugt die Wolle, erst nachträglich der Behandlung mit dem Plasma gemäß Schritt (a) und der Behandlung mit der Dispersion kationischer Polyurethane gemäß Schritt (b) zu unterziehen. Die Behandlung der Keratinfasern, bevorzugt der Wolle, gemäß Schritt (b) kann dabei nach an sich bekannten Ausrüstungsverfahren des Standes der Technik und in allen dafür geeigneten Apparaten erfolgen. Geeignet ist beispielsweise eine diskontinuierliche Arbeitsweise im Ausziehverfahren oder eine kontinuierliche Arbeitsweise durch Tauchen, Walzenauftrag, Foulardieren, Aufsprühen, Flatschen, Übergießen oder Lisseusenapplikation.

Gegebenenfalls schließt sich an die erfindungsgemäße Behandlung der Keratinfasern, bevorzugt der Wolle, mit den Schritten (a),(b) und (c) in beliebiger Reihenfolge, insbesondere der Behandlungsfolge aus den Schritten (a),(b),(c) (Ausführungsform A1), (a),(c),(b) (Ausführungsform A2) oder (c),(a),(b) (Ausführungsform B), ein weiterer Nachbehandlungsschritt (d) an, bei dem die Keratinfasern, bevorzugt die Wolle, mit weiteren Hilfsmitteln und Zusatzstoffen behandelt werden. Als derartige Hilfsmittel und Zusatzstoffe können beispielsweise Egalisiermittel, Tenside, Entlüfter, Netzmittel, Dispergiermittel, Fixiermittel, Weichmacher sowie Antistatika zum Einsatz gelangen. Dieser weitere Nachbehandlungssschritt wird ebenfalls vorteilhafterweise im gleichen Apparat durchgeführt wie der jeweils vorhergehende, d.h. bei den Ausrührungsformen A1 und A2 im Färbeapparat und bei der Ausführungsform B in dem jeweils für die Behandlung gemäß Schritt (b) verwendeten Apparat.

Die im erfindungsgemäßen Verfahren eingesetzten kationischen Polyurethane weisen in wässriger Dispersion eine unvergleichlich bessere Stabilität auf als die aus der DE-A-198 587 34 und DE-A-198 587 36 bekannten selbstdispergierenden Isocyanate. Die entsprechenden Dispersionen besitzen daher keinerlei Standzeiten im eigentlichen Sinne und können langfristig hergestellt und genutzt werden. Darüberhinaus verfügen die im erfindungsgemäßen Verfahren aufgebrachten kationischen Polyurethane über eine ausgezeichnete Waschpermanenz. Dies gilt insbesondere, wenn zur Herstellung der Dispersion der kationischen Polyurethane als Komponente (ii) Substanzen der Formel (II) eingesetzt werden, bei denen es sich um Umsetzungsprodukte von Fettaminen mit zwei Mol Ethylenoxid oder Propylenoxid handelt.

Die gefärbte und mit den kationischen Polyurethanen ausgerüsteten Keratinfasern, bevorzugt die Wolle, unterscheiden sich deutlich von der mit den selbstdispergierenden Isocyanaten ausgerüsteten Wolle. Bei den aus der DE-A-198 587 34 und DE-A-198 587 36 bekannten selbstdispergierenden Isocyanaten handelt es sich um niedermolekulare Verbindungen, die z.B. durch Umsetzung von organischen Diisocyanaten wie Diisocyanatobutan mit monofünktionellen Polyalkylenoxidalkoholen, -aminen oder -thiolen hergestellt werden. Diese selbstdispergierenden Isocyanate vernetzen auf der Oberfläche der Wolle in Gegenwart des Wassers. Hierbei reagieren die NCO-Endgruppen der Polyisocyanate mit dem Wasser unter Abspaltung von CO₂ und unter Bildung von Netzwerken durch Ausbildung von Harnstoffgruppierungen als Brückenglieder zwischen jeweils zwei Isocyanat-Molekülen. Die vernetzten längeren Ketten weisen somit relativ viele Harnstoffgruppierungen und nur sehr wenige Urethanbindungen auf. Im Gegensatz dazu besitzen die Polyurethane mit den angegebenen höheren Molekulargewichten in der Hauptkette in sehr großer Menge Urethanbindungen. Aufgrund der höheren Molekulargewichte ist die Endgruppenkonzentration relativ gering und die Endgruppen selber nur schwer zugänglich. Eine Vernetzung von eventuell in geringem Maße vorhandenen NCO-Endgruppen unter dem Wasser-Einfluss ist daher kaum zu erwarten.

### Beispiele:

### I Herstellung der kationischen Polyurethane

### Polyurethan 1: (erfindungsgemäß)

174,5 g Toluylendiisocyanat (Isomerengemisch aus dem 2,4- und 2,6-Isomer im Verhältnis 80 zu 20; insgesamt 1,003 mol) werden innerhalb von 1,5 Stunden zu einer Lösung von 119,2 g N-Methyldiethanolamin in 250 g Aceton bei Raumtemperatur zugegeben. Dann wird durch Aufnahme eines Infrarotspektrums geprüft, ob noch freie Isocyanatgruppen anwesend sind. Ist dies nicht der Fall, werden 707 g Wasser und 60 g Eisessig im Gemisch zulaufen gelassen. Es bildet sich eine homogene klare Flüssigkeit, aus der das Lösungsmittel abdestilliert wird. Ist der Feststoffgehalt von 29 % erreicht, so stellt man die Destillation ein.

### Polyurethan 2: (erfindungsgemäß)

168,8 g Toluylendiisocyanat (Isomerengemisch aus dem 2,4- und 2,6- Isomer im Verhältnis 80 zu 20; insgesamt 0,97 mol) werden innerhalb von 1,5 Stunden zu einer Lösung von 119,2 g N-Methyldiethanolamin in 250 g Aceton bei Raumtemperatur zugegeben. Dann wird durch Aufnahme eines Infrarotspektrums geprüft, ob noch freie Isocyanatgruppen anwesend sind. Ist dies nicht der Fall, werden 696 g Wasser und 60 g Eisessig im Gemisch zulaufen gelassen. Es bildet sich eine homogene klare Flüssigkeit, aus der das Lösungsmittel abdestilliert wird. Ist der Feststoffgehalt von 29 % erreicht, so stellt man die Destillation ein.

### II Ausrüstung der Wolle und Filzfreiprüfung

### Plasmavorbehandlung

Die Plasmabehandlung der Wolle wird in den nachfolgenden Ausrüstungsbeispielen immer wie folgt durchgeführt:

Zunächst wird feuchter Wollkammzug einer Coronabehandlung unterworfen, wobei folgende Parameter eingehalten werden:

| | |
|---|---|
| Walzenabstand | 0,8 mm |
| Luftzufuhr | 400,0 m³/Std. |
| Puls-Vollwellen ein | 4 |
| " " aus | 7 |
| Spreitung | 1: 2 |
| Vorschub | 5 m/min |
| Leistung | 4X 3,0 kW |

### Beispiel 1:

### (Reihenfolge der Behandlungsschritte: (a),(b),(c) (Ausführungsform A1); Färbung (c) mit Metallkomplexfarbstoffen mit einer Sulfogruppe) Schritt (b):

500 kg des gemäß Schritt (a) plasmabehandelten Wollkammzugs werden in einem Kammzugfärbeapparat (atmosphärisch oder geschlossen) zur pH-Einstellung auf einen pH-Wert von 4,5 bis 5 für 20 Minuten bei 40°C mit Essigsäure gespült. Dann wird die Wolle für 20 Minuten bei 40 °C mit 5 m³ einer Ausrüstungsflotte behandelt, die folgende Komponenten aufweist:
12 g/l Polyurethan 2
1,5 g/l Essigsäure 60 %ig
3,0 g/l Natriumacetat, wasserfrei.

Nach dieser Behandlung wird die Flotte abgelassen.

### Schritt (c):

Als Folgebehandlung wird die Wolle dann für 60 Minuten bei 98°C mit 5000 1 einer Färbeflotte behandelt, die folgende Komponenten aufweist:
0,3 % Isolan® Gelb S-GL
0,3 % Isolan® Rot S-RL
0,5 % Isolan® Grau S-GL
1,0 g/l Natriumsulfat kalz.
3,0 % Essigsäure 60%ig (entsprechend einem pH-Wert von 4,5)
1,0 % Avolan® S

Nach dem Färbevorgang wird die Färbeflotte abgelassen und das Färbegut bei 40 ° C 20 Minuten lang mit Wasser gespült, dann getrocknet.

Die Farbechtheiten der so gefärbten und filzfrei ausgerüsteten Wolle werden gemäß den Normen TM 174 (Schweißechtheit alkalisch) und TM 193 (Haushaltswäsche bei 50°C) der Woolmark Company untersucht und entsprechen den Forderungen.

### Beispiel 2:

### (Reihenfolge der Behandlungsschritte: (a),(c),(b) (Ausführungsform A2); Färbung (c) mit Metallkomplexfarbstoffen ohne Sulfogruppe ) Schritt (c):

500 kg des gemäß Schritt (a) plasmabehandelten Wollkammzugs werden in einem Kammzugfarbeapparat (atmosphärisch oder geschlossen) zur pH-Einstellung auf einen pH-Wert von 4,5 bis 5 für 20 Minuten bei 40°C mit Essigsäure gespült. Dann wird die Wolle für 60 Minuten bei 98°C mit 5000 1 einer Färbeflotte behandelt, die folgende Komponenten aufweist:
0,6 % Isolan® Gelb K-PRL 200 %
0,6 % Isolan® Bordeaux R 220 %
0,55 % Isolan® Grau K-PRL 200 %
1,0 g/l Natriumsulfat kalz.
3,0 % Essigsäure 60%ig (entsprechend einem pH-Wert von 4,5)
1,0 % Avolan® S

Nach dem Färbevorgang wird die Färbeflotte abgelassen und das Färbegut bei 40 °C 20 Minuten lang mit Wasser gespült.

### Schritt (b):

Als Folgebehandlung wird die Wolle für 20 Minuten bei 40 °C mit 5 m³ einer Ausrüstungsflotte behandelt, die folgende Kompenenten aufweist:
12 g/l Polyurethan 2
1,5 g/l Essigsäure 60 %ig
3,0 g/l Natriumacetat, wasserfrei.

Nach dieser Behandlung wird die Flotte abgelassen, die Wolle mit Wasser gespült und im Anschluß getrocknet.

Die Farbechtheiten der so gefärbten und filzfrei ausgerüsteten Wolle werden gemäß den Normen TM 174 (Schweißechtheit alkalisch) und TM 193 (Haushaltswäsche bei 50°C) der Woolmark Company untersucht und entsprechen den Forderungen.

### Beispiel 3:

### (Reihenfolge der Behandlungsschritte (a),(c),(b) (Ausführungsform A2); Färbung (c) mit Reaktivfarbstoffen)

### Schritt (c):

30 kg eines gemäß Schritt (a) plasmabehandelten Wollkammzuges werden in einem Kammzugfärbeapparat (atmosphärisch oder geschlossen) für 90 Minuten bei 98 °C mit 300 1 einer Färbeflotte behandelt, die folgende Komponenten aufweist:
0,165 % Remazol® Brillantgelb GL 150 %
0,11 % Realan® Rot
2,8 % Realan® Marineblau R
1,0 % Avolan® RW
3,0 % Essigsäure 60 % ig (entsprechend einem pH-Wert von 4,5)

Nach dieser Behandlung wird die Flotte abgelassen; es erfolgt eine Nachbehandlung mit einer wässrigen 0,0015%igen Ammoniak-Lösung bei einem pH-Wert von 8,5 über 20 Minuten bei 80°C.

Dann wird zweimal mit Wasser gespült und daraufhin die Wolle mit verdünnter Essigsäure schwach sauer eingestellt.

### Schritt (b):

Als Folgebehandlung wird die Wolle 20 Minuten bei 40 °C mit 300 1 einer Ausrüstungsflotte behandelt, die folgende Komponenten aufweist:
12g/l Polyurethan 2
1,5 g/l Essigsäure 60 %ig
3,0 g/l Natriumacetat, wasserfrei.

Die Wolle wird ohne Spülen getrocknet.

Die Farbechtheiten der so gefärbten und filzfrei ausgerüsteten Wolle werden gemäß den Normen TM 174 (Schweißechtheit alkalisch) und TM 193 (Haushaltswäsche bei 50°C) der Woolmark Company untersucht und entsprechen den Forderungen.

### Beispiel 4:

### (Reihenfolge der Behandlungsschritte: (a),(c),(b) (Ausführungsform A2); Färbung mit Säurefarbstoffen)

### Schritt (c):

30 kg eines gemäß Schritt (a) plasmabehandelten Wollkammzuges werden in einem Kammzugfärbeapparat (atmosphärisch oder geschlossen) für 90 Minuten bei 98 °C mit 300 1 einer Färbeflotteflotte behandelt, die folgende Komponenten aufweist:
0,51 % Supranol® Goldgelb S-WP 01
1,36 % Supranol® Rubin S-WP
0,58 % Supranol® Blau S-WP 01
1,0 g/l Natriumsulfat kalz.
3,0 % Essigsäure 60% ig (mit einem pH-Wert von 4,5)
1,00 % Avolan® S.

Nach der Färbung wird die Flotte abgelassen und das Färbegut bei 40° C auf der Färbemaschine gespült.

### Schritt (b):

Als Folgebehandlung wird die Wolle 20 Minuten bei 40 °C mit 300 1 einer Ausrüstungsflotte behandelt, die folgende Komponenten aufweist:
12 g/l Polyurethan 2
1,5 g/l Essigsäure 60 %ig
3,0 g/l Natriumacetat, wasserfrei.

Die Wolle wird ohne Spülen getrocknet.

Die Farbechtheiten der so gefärbten und filzfrei ausgerüsteten Wolle werden gemäß den Normen TM 174 (Schweißechtheit alkalisch) und TM 193 (Haushaltswäsche bei 50°C) der Woolmark Company untersucht und entsprechen den Forderungen.

### Beispiel 5:

### (Reihenfolge der Behandlungsschritte: (a),(c),(b) (Ausführungsform A2))

### Schritt (c):

30 kg eines gemäß Schritt (a) plasmabehandelten Wollkammzuges werden in einem Kammzugfärbeapparat (atmosphärisch oder geschlossen) für 45 Minuten bei 98 °C mit 300 1 einer Färbeflotteflotte behandelt, welche folgende Komponenten aufweist:

| | |
|---|---|
| 4,5 | % Diamant® Schwarz PV 200% |
| 3,0 | % Essigsäure 60% ig (mit einem pH-Wert von 4,5) |
| 0,5 | % Avolan® S. |

Nach 45 min Färbezeit wird dem Färbebad bei abgestelltem Dampf 1,0% Ameisensäure 85 % verdünnt zugesetzt. Das Färbebad wird erneut zum Kochen getrieben. Bei Kochtemperatur wird weitere 20 min gefärbt.

Das dann folgende frische Bad wird mit Ameisensäure 85 % auf pH 3,5 bis 3,8 eingestellt. Danach erfolgt der Zusatz von 1,58 % K2Cr2O7. Das Chromierungsbad wird langsam zum Kochen getrieben. Bei Kochtemperatur wird 30 min chromiert. Nach dem Chromiervorgang wird die Flotte abgelassen, die Wolle im Färbeapparat zwei Mal mit Wasser gespült und der pH-Wert der Wolle durch Spülen mit einer wässrigen 0,0015%igen Ammoniak-Lösung auf einen pH-Wert von 4,5 bis 4,8 eingestellt.

### Schritt (b):

Als Folgebehandlung wird die Wolle 20 Minuten bei 40 °C mit 300 1 einer Ausrüstungsflotte behandelt, welche folgende Komponenten aufweist:
12 g/l Polyurethan 2
1,5 g/l Essigsäure 60 %ig
3,0 g/l Natriumacetat, wasserfrei.

Die Wolle wird ohne Spülen getrocknet.

Die Farbechtheiten der so gefärbten und filzfrei ausgerüsteten Wolle werden gemäß den Normen TM 174 (Schweißechtheit alkalisch) und TM 193 (Haushaltswäsche bei 50°C) der Woolmark Company untersucht und entsprachen den Forderungen.

### III Untersuchungen zur Filzfreiheit der gefärbten und filzfrei ausgerüsteten Wolle:

Nach der Trocknung wird die Wolle der Beispiele 1-4 dem Aachener Filzkugeltest nach IWTO-Norm 20-69 unterworfen. Die Ergebnisse sind in der nachfolgenden

**Tabelle 1**

| zusammengefasst. Die Meßwerte sind dabei Mittelwerte einer Doppelbestimmung. | | |
|---|---|---|
| **Beispiel** | **Filzdichte** **[g/cm**^{**3**}**]** | **Filzkugeldurchmesser** **[cm]** |
| 2 | 0,044 | 3,506 |
| 3 | 0,048 | 3,415 |
| 4 | 0,049 | 3,398 |
| 5 | 0,045 | 3,477 |

Die gefundenen Werte für die Qualität der Filzfreiausrüstung sind als sehr gut zu bewerten und zwar unabhängig von der Reihenfolge der Behandlungsschritte (a), (b) und (c).

## Patentansprüche

1. Verfahren zur Färbung und Filzfreiausrüstung von Keratinfasem, **dadurch gekennzeichnet ist, dass** die Keratinfasern drei Behandlungsschritten ausgesetzt werden,
(a) einer Behandlung mit einem Plasma,
(b) einer Behandlung mit einer wässrigen Dispersion kationischer Polyurethane, und
(c) einer Färbung,
wobei diese Behandlungsschritte (a), (b) und (c) in jeder Reihenfolge durchgerührt werden können.

2. Verfahren gemäß Anspruch 1, **dadurch gekennzeichnet, dass** als Keratinfasern Wolle eingesetzt wird.

3. Verfahren nach Anspruch 1, **dadurch gekennzeichnet, dass** als Keratinfasern andere Tierhaare als Wolle oder Echthaare eingesetzt werden.

4. Verfahren gemäß Anspruch 1, **dadurch gekennzeichnet, dass** die Keratinfasern, bevorzugt Wolle,
- als erstes gemäß Schritt (a) einer Behandlung mit einem Plasma ausgesetzt,
- anschließend gemäß Schritt (b) mit einer wässrigen Dispersion kationischer Polyurethane behandelt werden,
- und diese Behandlung gemäß Schritt (b) in der Färbeapparatur erfolgt und entweder vor oder nach der Färbung der Keratinfasern, bevorzugt Wolle, gemäß Schritt (c) durchgeführt wird.

5. Verfahren gemäß Anspruch 4, **dadurch gekennzeichnet, dass** die Keratinfasern, bevorzugt Wolle,
- als erstes gemäß Schritt (a) einer Behandlung mit einem Plasma ausgesetzt,
- anschließend gemäß Schritt (b) in der Färbeapparatur mit einer wässrigen Dispersion kationischer Polyurethane behandelt werden,
- und zwar unmittelbar bevor abschließend eine Färbung der Wolle gemäß Schritt (c) erfolgt.

6. Verfahren gemäß Anspruch 4, **dadurch gekennzeichnet, dass** die Keratinfasern, bevorzugt Wolle,
- als erstes gemäß Schritt (a) einer Behandlung mit einem Plasma ausgesetzt,
- anschließend einer Färbung gemäß Schritt (c) unterzogen werden,
- und zwar unmittelbar bevor abschließend gemäß Schritt (b) in der Färbeapparatur die Behandlung mit einer wässrigen Dispersion kationischer Polyurethane erfolgt.

7. Verfahren gemäß Anspruch 1, **dadurch gekennzeichnet, dass** die Keratinfasern, bevorzugt Wolle,
- als erstes gemäß Schritt (c) einer Färbung unterzogen,
- anschließend gemäß Schritt (a) einer Behandlung mit einem Plasma ausgesetzt werden,
- und abschließend gemäß Schritt (b) mit einer wässrigen Dispersion kationischer Polyurethane behandelt werden.

8. Verfahren gemäß einem oder mehreren der Ansprüche 1-7, **dadurch gekennzeichnet, dass** die Plasmabehandlung der Keratinfasern, bevorzugt der Wolle, gemäß Schritt (a) entweder in Form einer Niedertemperatur-Plasmabehandlung bei verringertem Druck oder in Form einer Coronabehandlung bei Normaldruck erfolgt.

9. Verfahren gemäß einem oder mehreren der Ansprüche 1-8, **dadurch gekennzeichnet, dass** die gemäß Schritt (b) einzusetzenden kationischen Polyurethane ein Molekulargewicht (Gewichtsmittel) von mindestens 5000, bevorzugt mindestens 8000, besonders bevorzugt mindestens 9000 besitzen und die Obergrenze des Molekulargewichtes bei 50.000, vorzugsweise bei 45.000 und besonders bevorzugt bei 40.000 liegt.

10. Verfahren gemäß einem oder mehreren der Ansprüche 1-9, **dadurch gekennzeichnet, dass** die kationischen Polyurethane erhältlich sind durch Umsetzung von
(i) organischen Polyisocyanaten der allgemeinen Formel (I)
Q[NCO]_{p,} (I)
worin
p eine Zahl von 1,5 bis 5 darstellt und
Q einen organischen Rest darstellt
und
(ii) ein oder mehreren Bis- und/oder Polyhydroxylverbindungen, die mindestens ein tertiäres Stickstoffatom und mindestens zwei Hydroxylgruppen enthalten,
wobei der kationische Charakter der Polyurethane durch anschließende Protonierung oder Alkylierung der in der Komponente (ii) enthaltenen tertiären Stickstoffatome erzeugt wird.

11. Verfahren gemäß Anspruch 10, **dadurch gekennzeichnet, dass** bei der Umsetzung zur Herstellung der kationischen Polyurethane auch noch
(iii) ein oder mehrere Bis- und /oder Polyhydroxylverbindungen, welche keine Stickstoffatome enthalten und Molekulargewichte von 62 bis 5000 besitzen,
eingesetzt werden.

12. Verfahren gemäß Anspruch 10 oder 11, **dadurch gekennzeichnet, dass** als Bisund/oder Polyhydroxylverbindungen (ii) solche der allgemeinen Formel (II) eingesetzt werden,
HO-(CHR¹)ₘ-NR²-(CH₂R¹)ₙ-OH (II),
worin
n und m unabhängig voneinander eine Zahl von 1 bis 6 darstellen,
R¹ unabhängig voneinander Wasserstoff oder einen geradkettigen oder verzweigten C₁-C₄-Alkylrest darstellen, wobei entlang der Alkylenketten (CHR¹)ₙ und (CHR¹)ₘ von Kohlenstoffatom zu Kohlenstoffatom wechselnd der Rest R¹ sowohl Wasserstoff als auch ein geradkettiger oder verzweigter C₁- C₄-Alkylrest sein kann,
R² geradkettiges oder verzweigtes C₁-C₂₀-Alkyl, bevorzugt C₁-C₁₈-Alkyl, C₁-C₁₀-Cycloalkyl, bevorzugt C₅-C₆-Cycloalkyl, C₆-C₁₂-Aryl, bevorzugt Phenyl oder einen Rest -(CH₂)_{q}-OH, wobei q eine Zahl von 1 bis 6 darstellt.

13. Verfahren gemäß Anspruch 12, **dadurch gekennzeichnet, dass** als Bisund/oder Polyhydroxylverbindungen (ii) der allgemeinen Formel (II) N-Methyldiethanolamin, N-Ethyldiethanolamin, N-Butyldiethanolamin, N-Methyl-dipentanolamin-1,5, N-Ethyldipentanolamin-1,5, Triethanolamin, Umsetzungsprodukte von Fettaminen mit zwei Mol Ethylenoxid oder Propylenoxid oder Alkoxylierungsprodukte der oben genannten Verbindungen, bevorzugt von Tris-[2-(2-hydroxyethoxy)-ethyl]-amin eingesetzt werden.

14. Verfahren gemäß einem oder mehreren der Ansprüche 10-13, **dadurch gekennzeichnet, dass** als Bis- und /oder Polyhydroxylverbindungen (iii) Ethylenglykol, Propandiol-1,2, Propandiol-1,3, Butandiol-1,4, Butandiol-1,3, Butandiol-2,3, Butandiol-1,2, Butendiol-1,4, Butindiol-1,4, Pentandiol-1,5, Neopentylglykol, Hexandiol-2,5, Hexandiol-1,6, 3-Methylpentandiol-1,5, 2,5-Dimethylhexan-2,5-diol, Octadecandiol-1,12, Diethylenglygol, Dipropylenglykol, Triethylenglykol, Tripropylenglykol, Tetraethylenglykol, Tetrapropylenglykol sowie weitere höhere Polyethylen- und Polypropylenglykole, Glycerin, Trimethylolpropan, 2-Hydroxymethyl -2-methyl-1,3-propandiol, 1,2,6- Hexantriol oder Pentaerythrit eingesetzt werden.

15. Verfahren nach einem oder mehreren der Ansprüche 10-14, **dadurch gekennzeichnet, dass** die kationischen Polyurethane erhältlich sind durch Umsetzung von
(i) organischen Polyisocyanaten der allgemeinen Formel (I)
Q[NCO]ₚ, (I)
worin
p eine Zahl von 1,5 bis 5, insbesondere 2, darstellt und
Q einen aliphatischen Kohlenwasserstoffrest mit 2 bis 18, insbesondere 6 bis 10 Kohlenstoffatomen, einen cycloaliphatischen Kohlenwasserstoffrest mit 4 bis 15, insbesondere 5 bis 10 Kohlenstoffatomen, einen aromatischen Kohlenwasserstoffrest mit 6 bis 15, vorzugsweise 6 bis 13 Kohlenstoffatomen sowie einen araliphatischen Kohlenwasserstoffrest mit 8 bis 15, vorzugsweise 8 bis 13 Kohlenstoffatomen darstellt
und
(ii) Bis- und/oder Polyhydroxylverbindungen (ii) der allgemeinen Formel (II)
HO-(CHR¹ )ₘ-NR²-(CH₂R¹)ₙ-OH (II),
worin
n und m unabhängig voneinander eine Zahl von 1 bis 6 darstellen und insbesondere gleich sind und eine Zahl von 1 bis 3 darstellen,
R¹ unabhängig voneinander Wasserstoff oder einen geradkettigen oder verzweigten C₁-C₄-Alkylrest darstellen, wobei entlang der Alkylenketten (CHR¹)ₙ und (CHR¹)ₘ von Kohlenstoffatom zu Kohlenstoffatom wechselnd der Rest R¹ sowohl Wasserstoff als auch ein geradkettiger oder verzweigter C₁-C₄-Alkylrest sein kann,
R² geradkettiges oder verzweigtes C₁-C₂₀-Alkyl, insbesondere C₁-C₁₈-Alkyl, C₁-C₁₀-Cycloalkyl, insbesondere C₅-C₆-Cycloalkyl, C₆-C₁₂-Aryl, insbesondere Phenyl, oder einen Rest -(CH₂)_{q}-OH, wobei q eine Zahl von 1 bis 6, insbesondere 1 bis 3 darstellt,
und wobei der kationische Charakter der Polyurethane durch Protonierung oder Alkylierung der in der Komponente (ii) enthaltenen tertiären Stickstoffatome erzeugt wird.

16. Verfahren nach einem oder mehreren der Ansprüche 10-15, **dadurch gekennzeichnet, dass** kationische Polyurethane eingesetzt werden, die durch Umsetzung von
(i) 2,4-Toluylendiisocyanat oder 2,6-Toluylendiisocyanat oder 4,4'-Diisocyanatodiphenylmethan oder 2,4'-Diisocyanatodiphenylmethan oder Gemischen dieser Isomeren mit
(ii) N-Methyl- oder N-Butyldiethanolamin
erhältlich sind, wobei der kationische Charakter der Polyurethane durch Protonierung in Form einer Behandlung dieser Umsetzungsprodukte mit einer der Säuren aus der Gruppe bestehend aus Salzsäure, Schwefelsäure, Phosphorsäure, Ameisensäure, Essigsäure und Propionsäure erzeugt wird.

17. Verfahren gemäß einem oder mehreren der Ansprüche 1-16, **dadurch gekennzeichnet, dass** in Schritt (b) die wässrige Dispersion des kationischen Polyurethans bei einem pH -Wert von 2 bis 7, bevorzugt von 3 bis 6, besonders bevorzugt von 4 bis 6 und insbesondere von 4,5 bis 5,5 auf die Wolle appliziert wird.

18. Verfahren nach einem oder mehreren der Ansprüche 1-17, **dadurch gekennzeichnet, dass** die Konzentration der wässrigen Dispersion des kationischen Polyurethans in der Ausrüstungsflotte 0,1 bis 75 g/l, bevorzugt 0,5 bis 50 g/l beträgt, bezogen auf den Feststoffgehalt an Polyurethan.

19. Gefärbte und filzfrei ausgerüstete Keratinfasern, bevorzugt Wolle, und deren textile Verarbeitungsprodukte, **dadurch gekennzeichnet, dass** die Wolle nach einem oder mehreren der Verfahren gemäß den Ansprüchen 1-18 erhältlich ist.
